# EUROPEAN PATENT APPLICATION

(11) **EP 0 597 127 A1**
(43) Date of publication of application: **18.05.1994**
(21) Application number: 93911943.4
(22) Date of filing: 27.04.1993
(51) Int. Cl.: G05B 19/405

(54) **NUMERICAL CONTROL APPARATUS**

(30) Priority: 26.05.1992 JP 133528/92
(71) Applicant: FANUC LTD., Minamitsuru-gun, Yamanashi 401-05 (JP)
(72) Inventor: OTUKA, Shoichi, Fanuc Mansion Harimoni 7-302, Minamitsuru-gun, Yamanashi 01-05 (JP); KOZUKA, Gouta, Fanuc Dai-3 Vira-karamatsu, Minamitsuru-gun, Yamanashi 401-05 (JP); NAKAMURA, Naoki, Fanuc Mansion Harimomi 11-203, Minamitsuru-gun, Yamanashi 401-05 (JP)
(74) Representative: Brunner, Michael John
(86) International application number: JP9300556
(87) International publication number: WO9324869

(57) **Abstract**

This apparatus is to display animated images and texts on a multi-window screen, and instruct by voice the method of operation or the like. In accordance with the operational instruction from an operator, reading means (1) retrieves and reads the necessary data (2a) from a recording medium (1 a) containing at least one digital data of the animated image data, text data, and voice data, and then stores the retrieved data in storage means (2) provisionally. Image processing means (3) represents on the display (16) the animated image data (2aa) and text data (2ab) of the processed data stored in the storage means (2). Likewise, voice controlling means (4) converts the digital voice data (2ac) of the processed data (2a) stored in the storage means (2) to analogue signals for its reproduction by use of a speaker (27).

## Description

### Technical Field

The present invention relates to a numerical control device, and in particular, to a numerical control device which displays various information such as content explanation and operation procedures on a display screen or the like.

### Background Art

In the case of operating a numerical control device, it is conventionally necessary that an operator read through a manual on which operation procedures and the like are described. Further, in the case where even if the operator learned through the operation procedures, he forgets the procedures for operating a certain operation, so that the operator must learn again the corresponding operation procedures with reference to the index or the like of the aforesaid manual.

According to a conventional numerical control device, for example, in the case where a tool interference error is checked, an error number composed of the corresponding symbol or figure is displayed on the display screen to call the operator's attention. The operator who saw the error number needs to refer to a manual on which the cause of the error, or the like is described to fine a method for eliminating the error.

However, there is a problem in that it is considerably troublesome and takes time to obtain desired information from much information described on the manual.

### Disclosure of the Invention

The present invention has been made in view of the above problem. Therefore, an object of the present invention is to provide a numerical control device which displays various information such as content explanation and operation procedures by using dynamic image and characters with a simple operation, and vocally teaches them to an operator by means of speech.

In order to solve the above problems, the present invention provides a numerical control device which teaches various information such as content explanation and operation procedures to an operator, comprising: readout means which searches and reads out required processing data from record medium recording at least one digital data of dynamic image, character and speech data, memory means which temporarily stores the aforesaid processing data, image processing means which displays the dynamic image data and the character data of the processing data stored in the memory means on the display screen, and speech control means which reproduces the speech data of the processing data stored in the memory means by a speech output unit.

Pursuant to an operation command from the operator, the aforesaid readout means searches and reads out required processing data from record medium recording at least one digital data of dynamic image, character and speech data, and then stores it in the memory means temporarily.

The aforesaid image processing means displays the dynamic image data and the character data of the processing data stored in the memory means on the display screen pursuant to an operation command from the operator. Likewise, the aforesaid speech control means reproduces the speech data of the processing data stored in the memory means by a speech output unit.

### Brief Description of the Drawings

Fig. 1 is a diagram explanatory of the principle of the present invention;
Fig. 2 is a block diagram showing a configuration of a conversational numerical control device;
Fig. 3 is a view illustrating an example of a display screen, showing a screen for executing operation commands; and
Fig. 4 is a view illustrating an example of a display screen, showing a screen on which the command results are displayed.

### Best Mode of Carrying Out the Invention

One embodiment of the present invention will be described below with reference to the drawings.

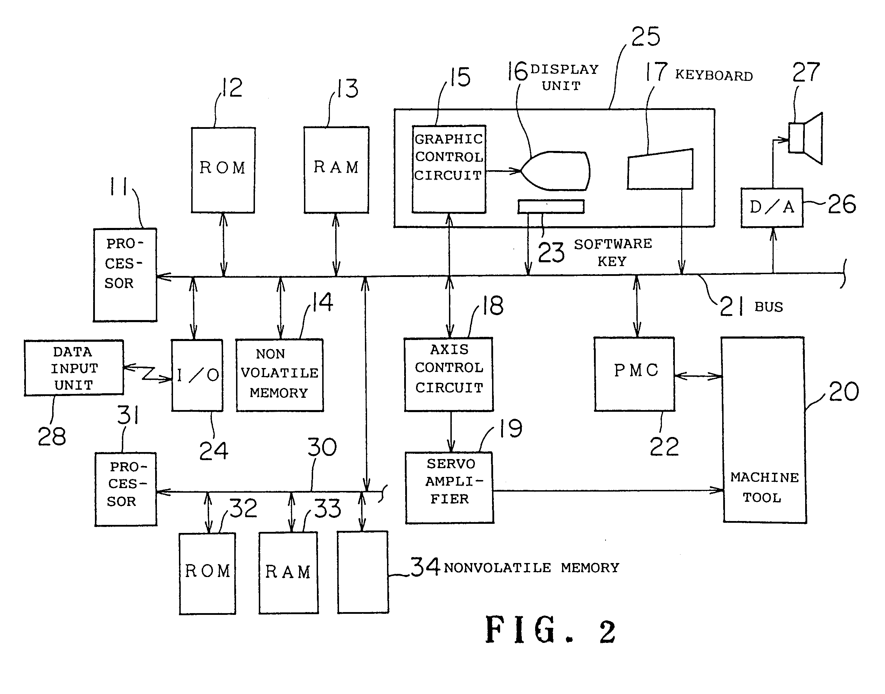

Fig. 2 is a block diagram showing a configuration of a conversational numerical control device according to one embodiment of the present invention.

A processor 11 controls the entirety of the conversational numerical control device according to system programs stored in a ROM 12. An EP-ROM or an EEPROM is used as the ROM 12. A RAM 13, which uses a SRAM or the like, stores various data or input/output signals. A CMOS which is backed up by means of a battery (not shown) is used as a nonvolatile memory 14 storing parameters, pitch error compensation, tool compensation and the like, which should be kept after a power source is turned off.

A graphic control circuit 15 converts a digital signal into a display signal, and supplies the converted signal to a display unit 16. Liquid crystal displays such as a CRT or a TFT (Thin Film Transistor) are used as the display unit 16. The display unit 16 displays a profile, machining conditions and the like when the operator prepares machining programs in a conversational mode.

A keyboard 17 comprising symbolic keys, numeric keys or the like, is used to input the required profile data and NC data by means of these keys.

An axis control circuit 18 receives an axial move command from the processor 11, and outputs an axial command to a servo amplifier 19. The servo amplifier 19 receives the move command, and drives a servo motor of a machine tool 20. These components are connected to each other through a bus 21.

A PMC (Programmable Machine Controller) 22 receives a T-function signal (tool selection command) or the like via the bus 21 when NC programs are executed. Then, the PMC processes this signal by sequence programs, and outputs a signal as an operation command, thus controlling the machine tool 20. Furthermore, the PMC receives a state signal from the machine tool 20, and executes the sequence processing, thus transmitting a required input signal to the processor 11 through the bus 21.

In addition, connected through the bus 21 are a software key 23, an input/output interface 24 and a D/A (Digital/Analog) converting circuit 26. The software key 23 is a command key whose function is modified by system programs or the like, and is located on a CRT/MDI panel 25 together with the above display unit 16 and the keyboard 17. The input/output interface 24 functions as an interface for inputting dynamic image, character and speech data, which are read out of record medium such as a magneto-optic disk or videotape, to the conversational numerical control device. The D/A converting circuit 26 converts digital speech data into an analog signal, and outputs the converted signal to a loud speaker 27 after a predetermined speech amplification is effected.

A processor 31 for conversation, which includes a bus 30, is connected with the bus 21 separately from the processor 11 which functions as a CPU for NC. Connected with the bus 30 are a ROM 32, RAM 33 and nonvolatile memory 34.

An input screen of conversational data, which is displayed on the above display unit 16, is stored in the ROM 32. In this conversational data input screen, the entirety of the operating trace of tool or the like is displayed as a background animation when NC format is prepared. Tasks or data, which can be set from the input screen, is displayed on the display unit 16 in a menu mode. A desired one of items indicated in the menu is selected by means of the software key 23, which is arranged on the lower portion of the screen, in accordance with the menu. The function, on which the software key 23 can command, vary for each screen. A SRAM or the like is used as the RAM 33, and various data for conversation is stored therein.

An inputted data is processed by means of the processor 31 for conversation, so that workpiece machining programs are prepared. The program data thus prepared is displayed with the background animation on the display unit 16 used in a conversational mode. The workpiece machining programs, which are stored in a nonvolatile memory 34 as NC format, are applied in a machining simulation of the machine tool 20, and are displayed with a foreground animation.

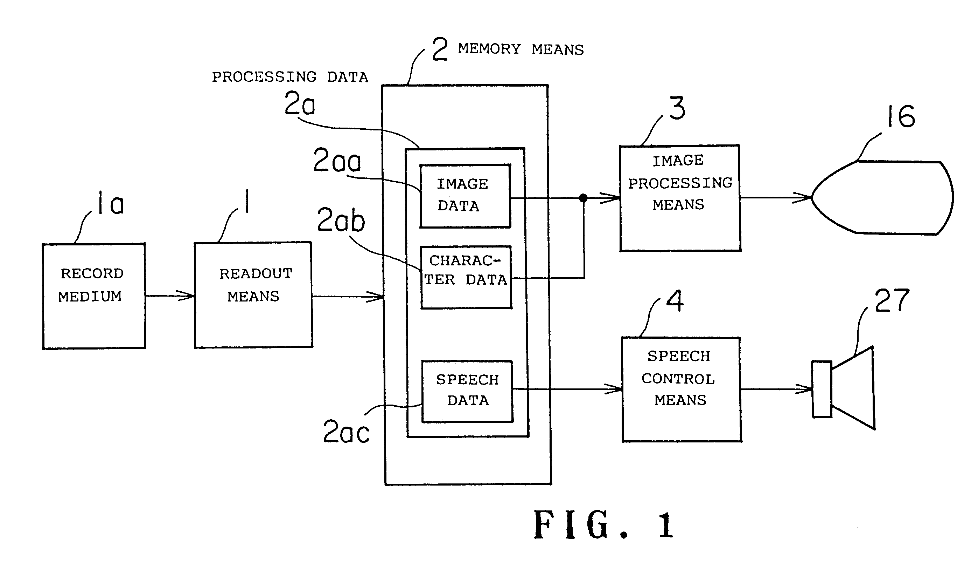

Fig. 1 is a view explanatory of the principle of the present invention. A numerical control device of the present invention comprises readout means 1, memory means 2, image processing means 3 and speech control means 4. Incidentally, the identical number is given to the same element as that in Fig. 2, and its explanation is omitted.

In the figure, pursuant to an operation command from the operator, the readout means 1 searches and reads out required processing data 2a from record medium 1 a recording at least one digital data of dynamic image, character and speech data, and temporarily stores the aforesaid processing data in the memory means 2. For example, magneto-optic disk or videotape is used as the above record medium 1 a. These dynamic image, character and speech data are recorded in the record medium 1 a as digital data including compressed data, and are made into data base so as to readily be searched.

The image processing means 3 displays dynamic image data 2aa and character data 2ab of processing data 2a stored in memory means 2 on the display unit 16. The speech control means 4 converts digital speech data 2ac of processing data 2a stored in memory means 2 into an analog signal, and the converted signal is reproduced by means of the loud speaker 27 functioning as a speech output unit, likewise.

In this case, the readout means 1 is equivalent to a data input unit 28 shown in Fig. 2. The memory means 2 is equivalent to the RAMs 13 and 33, likewise. The image processing means 3 has a function of displaying the input data on the display unit 16 through the graphic control circuit 15 when the processor 11 executes an image processing program stored in the ROM 12. The speech control means 4 has the function of supplying a speech output to the loud speaker 27 through the D/A converting circuit 26 when the processor 11 executes speech output programs stored in the ROM 12.

Next, operation procedures for an operator and processed results will be briefly described below.

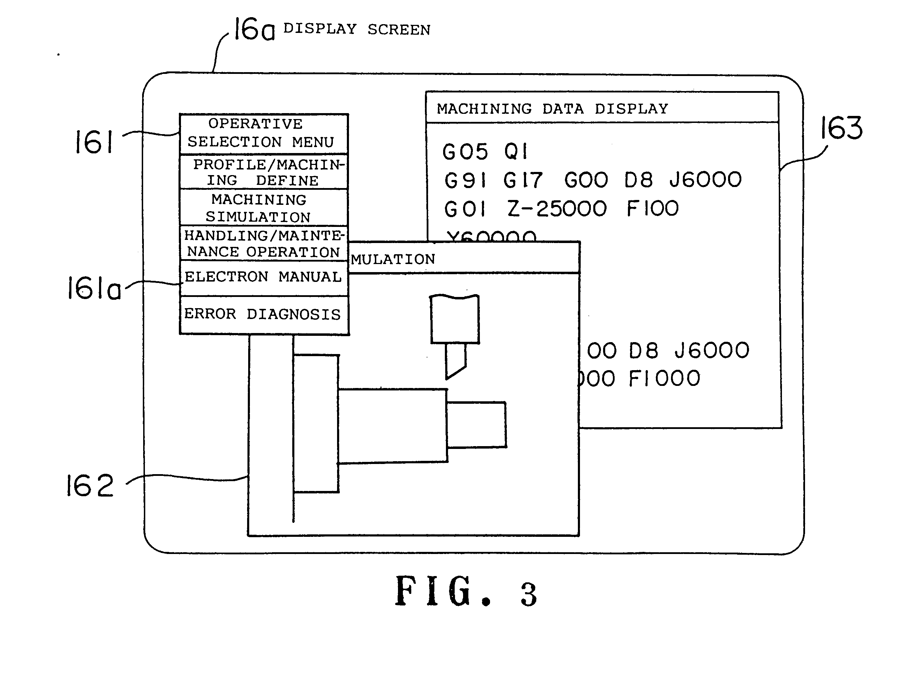

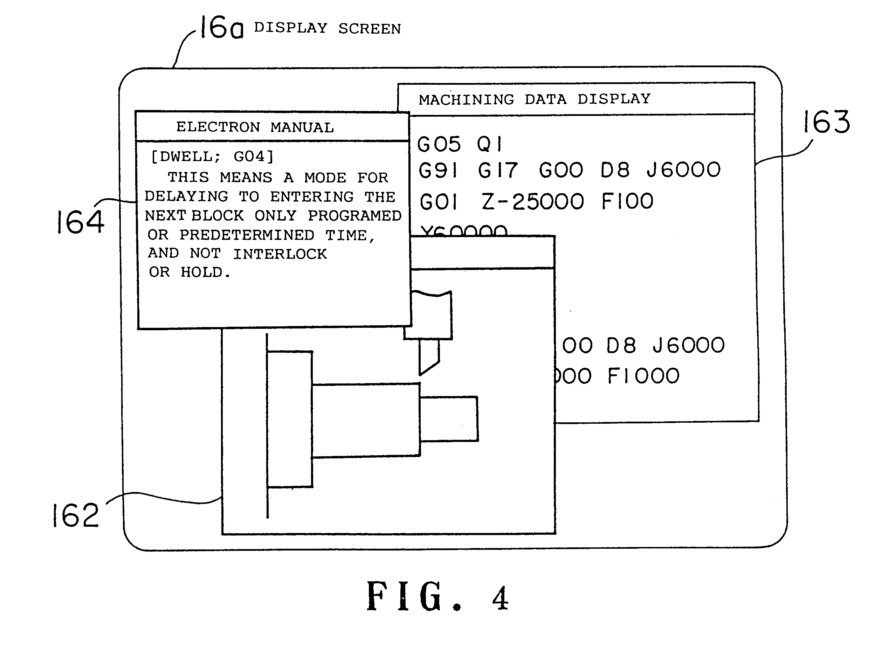

Figs. 3 and 4 are views showing examples of a display screen. In these figures, a display screen 16a is a display screen which is displayed on the display unit 16 of Fig. 2. Fig. 3 shows a screen when an operator executes an operation command, and Fig. 4 shows a screen indicative of commanded results.

In Fig. 3, an operative selection menu window 161, a machining simulation window 162 and a machining data display window 163 are displayed on the display screen 16a. These windows are displayed when the operator executes a predetermined operation.

In the machining simulation window 162, the halfway process of turn machining simulation is displayed. In the machining data display window 163, part of machining data is displayed.

In the operative selection menu window 161, various items such as profile/machining definition, machining simulation, treatment/maintenance operation, electron manual and error diagnosis are displayed as one example. The operator commands desired one of these items by moving a cursor on the keyboard shown in Fig. 2.

In this case, if the operator commands the electron manual 161 a by moving the above cursor, a question about the item required for search is displayed. Further, if the operator commands "Dwell," "Explanation" and the like as the required item, the display screen 16a is changed from an electron manual window 164 shown in Fig. 4 to the operative selection menu window 161.

In the electron manual window 164, the content concerning the questioned item is displayed. Although character data is displayed on the display screen of Fig. 4, the content may be explained by means of dynamic image display by dynamic image data or speech by speech data as required. The dynamic image display and speech message are combined so that operation procedures and the like which are difficult to be taught by only character display can be readily taught to the operator visually and aurally.

Further, the character and dynamic image displays by the above character and dynamic image data are displayed on different windows, respectively so that the content explanation and operation procedures can be readily taught to the operator together.

For example, in the case where a tool interference error is checked, the cause of error is explained to the operator by means of the character display window, and the method of eliminating the error is taught to the operator by means of dynamic image display and speech. Therefore, the content explanation of the error and the eliminating method thereof can be precisely taught to the operator. In addition, it is not necessary that the operator refer to the manual every time an error occurs, so that the operator can quickly eliminate the above error.

As described above, the conversational numerical control device has been applied in the present invention. However, other numerical control devices can be also applied in the present invention, likewise.

The magneto-optic disk capable of recording large capacity data is used as record medium 1 a. However, a CD-ROM, large capacity harddisk, semiconductor device and the like may be used as record medium 1 a, likewise.

Further, the videotape, which records dynamic image, character and speech data as digital data, is used as record medium 1 a. However, a videotape in which the dynamic image data and the speech data are recorded as an analog image signal and a speech signal, respectively, may be used as record medium 1 a. In this case, the analog image signal and the speech signal may be directly supplied from the data input unit 28 to the display unit 16 or the loud speaker 27 without passing through the input/output interface 24 and the bus 21.

The operator selects and inputs desired menu item and figure by using the cursor of the keyboard 17 shown in Fig. 2. In addition, the operator may select and input them by using pointing devices such as a mouse or touchpanel, according to a command, what is called, "icon" displayed on the display screen 16a.

As described above, according to the present invention, readout means reads out required processing data in accordance with the operation command from the operator, and temporarily stores it in memory means. Then, image processing means displays dynamic image and character data stored in memory means on the display unit, and speech control means reproduced speech data by means of the speech output unit. Therefore, various information such as content explanation and operation procedures can be taught to an operator with simple operation without reading a manual. Further, the operation is very easy, so that operability can be improved.

## Claims

1. A numerical control device which teaches various information such as content explanation and operation procedures to an operator, comprising:
readout means which searches and reads out required processing data from record medium recording at least one digital data of dynamic image, character and speech data;
memory means which temporarily stores said processing data;
image processing means which displays the dynamic image data and the character data of said processing data stored in said memory means on a display unit; and
speech control means which reproduces the speech data of said processing data stored in said memory means by a speed output unit.

2. A numerical control device according to claim 1, wherein said record medium is a magneto-optic disk.

3. A numerical control device according to claim 1, wherein said record medium is videotape.

4. A numerical control device according to claim 1, wherein said record medium is a CD-ROM.

5. A numerical control device according to claim 1, wherein said record medium is a harddisk.

6. A numerical control device according to claim 1, wherein said record medium is a semiconductor disk.

7. A numerical control device according to claim 1, wherein said image processing means is constituted so that said dynamic image data and said character data are displayed on different windows.

8. A numerical control device according to claim 1, wherein said digital data is made into data base, and recorded in said record medium.
